Europäisches Patentamt

(19) European Patent Office  (11) Publication number: **0 192 370**

Office européen des brevets  **B1**

(12) **EUROPEAN PATENT SPECIFICATION**

(45) Date of publication of the patent specification: 02.08.89

(21) Application number: **86300696.1**

(22) Date of filling: **03.02.86**

(51) Int. Cl.⁴: **H 01 M 10/39**

(54) **Sodium-sulphur storage battery.**

(30) Priority: **19.02.85 JP 30726/85**

(43) Date of publication of application: **27.06.86 Bulletin 86/35**

(45) Publication of the grant of the patent: **02.08.89 Bulletin 89/31**

(84) Designated Contracting States: **DE FR GB**

(56) References cited: **DE-A-2 638 484**

**PATENTS ABSTRACTS OF JAPAN**, vol. 9, no. 131 (E-319) 1854 , &th June 1985; & JP-A-60 17 870 (YUASA DENCHI K.K.) 29-01-1985
**PATENTS ABSTRACTS OF JAPAN**, vol. 4, no. 75 (E-13) 557 , May 31, 1980; & JP-A-55 43 755 (YUASA DENCHI K.K.) 27-03-1980
**PATENTS ABSTRACTS OF JAPAN**, vol. 4, no. 63 (E-10) 545 , May 13, 1980; & JP-A-55 32 319 (YUASA DENCHI K.K.) 07-03-1980

(73) Proprietor: **YUASA BATTERY CO., LTD., 6-6, Jyousai- cho, Takatsuki- shi, Osaka (JP)**

(72) Inventor: **Kagawa, Hiroshi c/o Yuasa Battery Company Limited, 6-6 Jyousai- cho, Takatsuki-shi Osaka (JP)**

(74) Representative: **Barker, Rosemary Anne, c/o O'BRIENS 94 Market Street, Manchester M1 1PJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

**Description**

**Sodium-sulphur storage battery**

This invention relates to a sodium-sulphur storage battery and more particularly its construction.

In general terms, a sodium-sulphur storage battery is a high temperature secondary battery in which sodium, used as negative reactant, and sulphur, used as positive reactant, are completely separated from each other by a sodium ion conductive solid electrolyte tube made, for example, of beta-two-dash alumina. Such a battery is also a high performance battery having a theoretical discharging capacity of 100 with respect to a theoretical charging capacity of 100, i.e. the ratio of the discharging to the charging capacity should be 100 : 100.

However, in practice, the aforesaid theoretical capacities cannot be obtained because of problems such as low utilization of the negative reactant, low utilization of the positive reactant and insufficient gastightness (i.e. leakage) at thermocompressive joints.

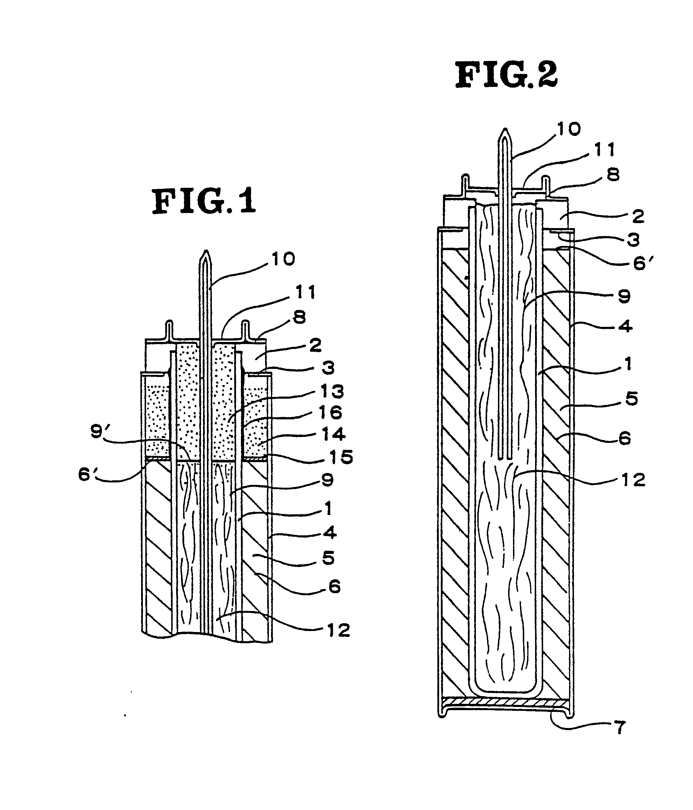

The above problems will be explained further with reference to Figure 2, which is a sectional view of a conventional sodium-sulphur storage battery. As shown in Figure 2, an upper end of a solid electrolyte tube 1 is connected by solder glass to an alpha-alumina ring 2, the lower surface of which is thermocompressively jointed to a positive cover 3 with an aluminum layer therebetween. The outer periphery of the cover 3 is welded to the upper end of a battery housing 4. Sulphur, which is used as positive reactant 5, is impregnated in electroconductive material 6, such as graphite felt, disposed between the battery housing 4 and the solid electrolyte tube 1. A bottom cover 7 is arranged in the housing 4 and is welded at its periphery to the lower end of the housing 4. A porous mass of metallic fibre 9, such as stainless steel is filled into the solid electrolyte tube 1. A negative collector tube 10, which is welded to a negative cover 11, projects downwards into the tube 1. The outer periphery of the negative cover 11 is welded to a negative auxiliary cover 8 which is thermocompressively jointed to the upper surface of the alpha-alumina ring 2 with an aluminum layer therebetween. The negative collector tube 10 is sealed by vacuum welding after sodium, which is used as negative reactant 12 is introduced under vacuum through the negative collector tube 10.

The sodium-sulphur storage battery having above-described structure has following disadvantages. The sodium used as the negative reactant 12 spreads above the metallic fibre 9 filled into the solid electrolyte tube 1, and the sodium which is thus spread does not contribute to the discharging of the battery thereby reducing the utilization factor of the negative reactant. Moreover, since the sodium which is spread in this way occupies a position higher than an upper surface 6' of the positive electroconductive material 6, it may contact the positive reactant 5 through the solid electrolyte tube 1 and react directly with it, in which case heat is generated. If such heat is generated, the solid electrolyte tube 1 may be broken and the thermocompressively joint between the alpha-alumina ring 2 and the negative auxiliary cover 8 may be corroded leading to insufficient gastightness, i.e. leakage. On the other hand, when the positive reactant 5 discharges, the volume thereof increases and the liquid level of the positive reactant 5 rises, so that the reactant 5 wets the upper inner surface of the battery housing 4 and the lower surface of the positive cover 3. In the subsequent charging operation, the reactant 5 which has wetted the aforesaid surfaces may remain there without being charged. This reduces the utilization factor of the positive reactant 5. Moreover, the positive reactant 5 which has wetted the lower surface of the positive cover 3 may also cause corrosion and insufficient gastightness at the thermocompressively joint between the positive cover 3 and the alpha-alumina ring 2.

Accordingly, it is an object of the present invention to provide a sodium-sulphur storage battery, in which the utilization of the positive and negative reactants is improved, and in which insufficient gastightness and breakage of the solid electrolyte tube are prevented.

With this object in view, the present invention provides a sodium-sulphur storage battery comprising a solid electrolyte tube filled with a porous mass of metallic fibre and a battery housing around the solid electrolyte tube with electroconductive material impregnated with positive reactant, sulphur, disposed in the space between the battery housing and the solid electrolyte tube, characterised in that a substance in powder or granular form or a mixture of these which is resistant to attack by molten sodium and has a porosity less than that of the metallic fibre is filled into a space within said solid electrolyte tube above said metallic fibre, in that a ring is disposed on the upper surface of the electroconductive material and a substance in powder or granular form or a mixture of these which is resistant to attack by molten sulphur is filled into a further space above said ring and is prevented from dropping by said ring, and in that a solder glass layer, which prevents deposition of the sodium, as the negative reactant in the solid electrolyte tube, is arranged on a portion of the outer surface of the solid electrolyte tube in said further space.

The invention will be described further, by way of example, with reference to the accompanying drawings, in which:

Figure 1 is a fragmentary sectional view of a preferred embodiment of a sodium-sulphur storage battery of the invention; and

Figure 2 is a sectional view of a conventional sodium-sulphur storage battery, as already described.

Referring to Figure 1, parts and members corresponding to those in Figure 2 have been given the same reference numbers to facilitate understanding. In addition, the reference numeral 13 indicates alpha-alumina powder which is used as the substance having sufficient resistance to chemical and electrochemical attack by molten sodium and which is filled into a first space above the metallic fibre 9. The porosity of the powder 13 is chosen so as to be smaller than that of the metallic fibre 9 so as to prevent spreading of the negative reactant 12. Also, the reference numeral 14 indicates alpha-alumina in powder or granular form, or glass in powder or granular form, or a mixture of these, which functions as the substance having sufficient resistance to chemical and electrochemical attack by molten sulphur and which is filled into a second space above the positive electroconductive material 6. The substance 14 is prevented from dropping or falling into the material 6 by a graphite felt ring 15. A solder glass layer 16 of less than 1 mm e.g. of about 0.5 mm thickness is applied to the outer peripheral surface of a portion of the solid electrolyte tube 1 which is positioned in said second space.

In the illustrated example of the invention, the metallic fibre 9 in the solid electrolyte tube 1 and the positive electroconductive material 6 are so arranged that the upper surfaces 9' and 6' thereof are horizontally aligned. The vertical distance between the upper surface 6' of the positive electroconductive material 6 and the lower surface of the alpha-alumina ring 2 is not less than 10 mm, e.g. about 15 mm.

The substance 13, which may advantageously be alpha-alumina powder of about 30 to 80 mesh (approx. 4.7 to 12.5 particles cm$^{-2}$), is filled into the space above the metallic fibre 9 and partially enters the metallic fibre 9. The substance 14, which may advantageously be a mixture of alumina and glass powder of about 30 to 80 mesh (approx. 4.7 to 12.5 particles cm$^{-2}$) and about 100 to 200 mesh (approx. 15.6 to 31.2 particles cm$^{-2}$) respectively, is filled into the space above the positive electroconductive material 6, the lower end of the space (i.e. the upper surface 6' of the material 6) being covered by the ring 15 made of graphite felt to prevent the mixture 14 from dropping into the material 6.

Ten cells each having the above-described structure as illustrated in Figure 1 and ten cells of conventional structure as shown in Figure 2 were manufactured and tested for utilization of the negative reactant, utilization of the positive reactant and occurrence of insufficient gastightness in the thermocompressive joint between the alpha alumina ring 2 and the solid electrolyte tube 1. The result of the test is indicated in the following table 1.

**Table 1**

| Type<br>Test Parameter | | Battery of<br>the invention | Conventional<br>Battery |
|---|---|---|---|
| Utilization Factor of<br>Negative Reactant | over 90 % | 1 cell | 0 cell |
| | 85 - 90 % | 7 cell | 4 cell |
| | 75 - 85 % | 2 cell | 5 cell |
| | Below 75 % | 0 cell | 1 cell |
| Utilization Factor of<br>Positive Reactant | Over 90 % | 7 cell | 1 cell |
| | 80 - 90 % | 3 cell | 1 cell |
| | 70 - 80 % | 0 cell | 6 cell |
| | Below 70 % | 0 cell | 2 cell |
| Insufficient<br>Gastightness | Existed | 0 cell | 6 cell |
| | None | 10 cell | 4 cell |

As apparent from table 1, with the battery of the invention, both the utilization factor of the negative reactant and the utilization factor of the positive reactant are improved compared to the conventional battery, and the insufficient gastightness in the thermocompressive joint is completely avoided.

The reason why 15 mm is preferred as the length of the space between the upper surface 6' of the positive electroconductive material 6 and the lower surface of the alpha-alumina ring 2 is that it has been found that a space of at least 10 mm is required to prevent rising of the liquid level of the positive reactant 5 by the substance 14 having resistance to molten sulphur.

The reason why the thickness of the solder glass layer 16 is preferably about 0.5 mm is that it is sufficient to prevent deposition of the sodium used as the negative reactant 12 in the solid electrolyte tube 1. If the layer 16 were much thicker, however, it might crack and break the solid electrolyte tube 1 when the temperature rose. Therefore, the thickness of the layer 16 is preferably 1 mm or less. However, there is substantially no limitation with respect to the fill densities, grain sizes and fibre diameters of the metallic fibre 9, the substance 13 resistant to molten sodium, the substance 14 resistant to molten sulphur and the electroconductive material 6. These can be chosen at appropriate values substantially without limtation.

With the sodium-sulphur storage battery of the invention, as described hereinbefore, the utilization factor of the negative reactant and the utilization factor of the positive reactant can be improved, and insufficient gastightness is completely avoided at the thermocompressive joints so that reliability is remarkably improved compared to previously known sodium-sulphur batteries.

## EP 0 192 370 B1

**Claims**

1. A sodium-sulphur storage battery compising a solid electrolyte tube (1) filled with a porous mass of metallic fibre (9), and a battery housing (4) around the solid electrolyte tube (1) with electroconductive material (6), impregnated with positive reactant, sulphur (5), disposed in the space between the battery housing (4) and the solid electrolyte tube (1), characterised in that a substance (13) in powder or granular form or a mixture of these which is resistant to attack by molten sodium and has a porosity less than that of the metallic fibre (9) is filled into a space within said solid electrolyte tube (1) above said metallic fibre (9), in that a ring (15) is disposed on the upper surface of the electroconductive material (6) and a substance (14) in powder or granular form or a mixture of these which is resistant to attack by molten sulphur is filled into a further space above said ring (15) and is prevented from dropping by said ring, and in that a solder glass layer (16), which prevents deposition of the sodium as the negative reactant (12) in the solid electrolyte tube (1), is arranged on a portion of the outer surface of the solid electrolyte tube (1) in said further space.

2. A sodium-sulphur storage battery as claimed in claim 1 wherein the substance (13) in powder or granular form which is resistant to molten sodium is alpha-alumina.

3. A sodium-sulphur storage battery as claimed in claim 1 or 2 wherein the substance (14) in powder or granular form which is resistant to molten sulphur is alpha-alumina and/or glass.

4. A sodium-sulphur storage battery as claimed in claim 1, 2 or 3 wherein the ring (15) preventing dropping of the substance (14) is a graphite felt ring.

5. A sodium-sulphur storage battery as claimed in any preceding claim wherein the further space has a length of at least 10 mm between the upper surface (6') of the electroconductive material (6) and a lower surface of an alpha-alumina ring (2) connected to the solid electrolyte tube (1).

6. A sodium-sulphur storage battery as claimed in any preceding claim wherein the thickness of the solder glass layer (16) is 1 mm or less.


**Patentansprüche**

1. Natriumschwefelspeicherbatterie mit einem Festelektrolytrohr (1), das mit einer porösen Masse aus Metallfasern (9) gefüllt ist, mit einem das Festelektrolytrohr (1) umfassenden Batteriegehäuse (4) und mit elektrisch leitfähigem und mit einem positiven Reaktanden, Schwefel (5), getränkten Material (6) in dem Zwischenraum zwischen dem Batteriegehäuse (4) und dem Festelektrolytrohr (1),
dadurch gekennzeichnet, daß eine Substanz (13) in Pulver- oder Granulatform oder aus einer Mischung davon, die gegen Angriffe von geschmolzenem Natrium resistent ist und eine Porosität hat, die kleiner ist als diejenige der Masse aus Metallfasern (9), in einen Raum innerhalb des Festelektrolytrohres (1) eingefüllt ist, der oberhalb der Metallfaserfüllung ist, daß auf der Oberseite des elektrisch leitfähigen Materials (6) ein Ring (15) angeordnet ist, daß eine Substanz (14) in Pulver- oder Granulatform oder aus einer Mischung davon, die gegen Angriffe von geschmolzenem Schwefel resistent ist, in einen anderen Raum oberhalb des Ringes (15) eingefüllt und durch den Ring am Absinken gehindert ist, und daß ein Schmelzglasbelag (16), der ein Ablagern von Natrium als dem im Festelektrolytrohr (1) befindlichen negativen Reaktanden (12) verhindert, auf einem Teil der Außenseite des Festelektrolytrohres (1) in diesem anderen Raum angebracht ist.

2. Natrium-Schwefel-Speicherbatterie nach Anspruch 1, dadurch gekennzeichnet, daß als gegenüber geschmolzenem Natrium resistente Substanz (13) in Pulver- oder Granulatform Alpha-Aluminiumoxyd verwendet ist.

3. Natrium-Schwefel-Speicherbatterie nach Anspruch 1 oder 2, dadurch gekennzeichnet, daß als gegenüber geschmolzenem Schwefel resistente Substanz (14) in Pulver- oder Granulatform Alpha-Aluminiumoxyd und/oder Glas verwendet ist.

4. Natrium-Schwefel-Speicherbatterie nach Anspruch 1, 2 oder 3, dadurch gekennzeichnet, daß der das Absinken der Substanz (14) verhindernde Ring (15) ein Graphitfilzring ist.

5. Natrium-Schwefel-Speicherbatterie nach einem der vorangehenden Ansprüche, dadurch gekennzeichnet, daß der andere Raum eine Länge von mindestens 10 mm zwischen der Oberseite (6') des elektrisch leitfähigen Materials (6) und einer Unterseite eines mit dem Festelektrolytrohr (1) verbundenen Alpha-Aluminiumoxydringes (2) aufweist.

6. Natrium-Schwefel-Speicherbatterie nach einem der vorangehenden Ansprüche, dadurch gekennzeichnet, daß die Dicke des Schmelzglasbelages (16) 1 mm oder weniger beträgt.


**Revendications**

1. Batterie secondaire sodium-soufre comportant un tube d'électrolyte solide (1) rempli d'une masse poreuse de fibres métalliques (9) et une enveloppe de batterie (4) entourant le tube d'électrolyte solide (1), un matériau conducteur de l'électricité (6) imprégné de réactif positif (soufre 5) étant disposé dans l'espace formé entre l'enveloppe de batterie (4) et le tube d'électrolyte solide (1), caractérisée en ce qu'une substance (13), sous

4

forme de poudre, de granules ou d'un mélange correspondant, qui résiste à l'attaque par le sodium fondu et a une porosité inférieure à celle des fibres métalliques (9), est disposée dans un espace situé, dans ledit tube d'électrolyte solide (1), au-dessus desdites fibres métalliques (9), en ce qu'une bague (15) est disposée sur la surface supérieure du matériau conducteur de l'électricité (6) et en ce qu'une substance (14), sous forme de poudre, de granules ou d'un mélange correspondant, qui résiste à l'attaque par le soufre fondu, est disposée dans un autre espace situé au-dessus de ladite bague (15), ladite bague empêchant la chute de cette substance, et en ce qu'une couche de brasure au verre (16), qui empêche le dépôt du sodium, en tant que réactif négatif (12), dans le tube d'électrolyte solide (1), est disposée sur une partie de la surface extérieure du tube d'électrolyte solide (1) dans ledit autre espace.

2. Batterie secondaire sodium-soufre selon la revendication 1, dans laquelle la substance (13) sous forme de poudre ou de granules, qui résiste au sodium fondu, est de l'alumine alpha.

3. Batterie secondaire sodium-soufre selon la revendication 1 ou 2, dans laquelle la substance (14) sous forme de poudre ou de granules, qui résiste au soufre fondu, est de l'alumine alpha et/ou du verre.

4. Batterie secondaire sodium-soufre selon la revendication 1, 2 ou 3, dans laquelle la bague (15) qui empêche la chute de la substance (14) est une bague en feutre de graphite.

5. Batterie secondaire sodium-soufre selon l'une quelconque des revendications précédentes, dans laquelle l'autre espace a une longueur d'au moins 10 mm entre la surface supérieure (6') du matériau conducteur de l'électricité (6) et la surface inférieure de la bague (2) en alumine alpha assemblée avec le tube d'électrolyte solide (1).

6. Batterie secondaire sodium-soufre selon l'une quelconque des revendications précédentes, dans laquelle l'épaisseur de la couche de brasure au verre (16) est inférieure ou égale à 1 mm.

# FIG.1

# FIG.2